# FASCICULE DE BREVET EUROPEEN

(11) **EP 2 574 543 B1**
(45) Date de publication et mention de la délivrance du brevet: **11.03.2015**
(21) Numéro de dépôt: 12186332.8
(22) Date de dépôt: 27.09.2012
(51) Int. Cl.: B64C 1/14, B64C 1/06

(54) **Structure de pointe avant d'aéronef et aéronef correspondant**
Bugstruktur eines Luftfahrzeugs und Luftfahrzeug mit einem solchen Bug
Aircraft nose structure, and aircraft comprising such a structure

(30) Priorité: 30.09.2011 FR 1158780
(43) Date de publication de la demande: 03.04.2013
(73) Titulaire: Airbus Operations, 31060 Toulouse (FR)
(72) Inventeur: Guering, Bernard, 31850 Montrabé (FR)
(74) Mandataire: Santarelli

(56) Documents cités:
- US-A1- 2008 149 769

## Description

La présente invention concerne une structure de pointe avant d'aéronef et un aéronef muni d'une pointe avant avec une telle structure.

La pointe avant d'un aéronef, ou cockpit, reçoit les pilotes ainsi que les systèmes de commande et/ou de visualisation pour le pilotage de l'aéronef. Cette partie avant reçoit un pare-brise comportant un ensemble de glaces, glaces frontales et glaces latérales, afin de permettre aux pilotes d'avoir une bonne visibilité vers l'extérieur.

Les différentes glaces frontales et latérales sont montées entre un entablement inférieur et un entablement supérieur qui s'étendent sensiblement à l'horizontale et sont séparés l'un de l'autre par des montants latéraux sensiblement verticaux.

La structure du fuselage d'un aéronef comporte généralement des cadres sensiblement circulaires s'étendant dans des plans transversaux (par rapport à la direction de déplacement de l'aéronef) reliés par des longerons longitudinaux. Ces cadres sont presque tous fermés car ainsi ils sont "autostables" : les tensions dans le cadre sont équilibrées et réparties. Toutefois, au niveau de la pointe avant de l'aéronef, du fait notamment de la présence du pare-brise, les cadres sont non plus fermés mais ouverts. Ils sont interrompus au niveau de l'entablement (inférieur) du pare-brise. Il convient alors de renforcer ces cadres ouverts pour limiter leur déformation lorsqu'ils sont soumis à des contraintes mécaniques, telles par exemple la différence de pression entre l'intérieur et l'extérieur de l'aéronef en vol.

Les solutions mises en oeuvre dans un aéronef de l'art antérieur consistent à renforcer, d'une part, les cadres et principalement à proximité de l'entablement, c'est-à-dire à l'endroit où ils sont ouverts et, d'autre part, l'entablement inférieur (et aussi supérieur). Ces renforcements sont complexes, imposent un surplus de masse sensible et viennent empiéter sur le volume à l'intérieur du cockpit qui est destiné à recevoir les systèmes de commande et/ou de visualisation.

La présente invention a alors pour but de fournir une structure de pointe avant d'aéronef améliorée. Les performances mécaniques de la structure doivent bien entendu être au moins conservées. La structure sera de préférence simple, peu encombrante et de masse réduite. Elle s'intégrera avantageusement dans l'aménagement intérieur d'un cockpit d'aéronef.

À cet effet, la présente invention propose une structure de pointe avant d'aéronef comportant des cadres, un entablement inférieur et un entablement supérieur destinés à recevoir un pare-brise, l'entablement inférieur présentant une forme cintrée comprenant deux branches.

Selon la présente invention, les deux branches de l'entablement inférieur sont reliées entre elles par une bielle de liaison.

La bielle de liaison agit alors pour maintenir les deux branches de l'entablement inférieur de la même manière qu'une corde maintient cintré un arc. Une telle bielle est d'une structure simple, d'une masse réduite et permet également de laisser un espace libre entre la bielle et l'entablement inférieur.

Selon une variante préférée, la structure de pointe avant d'aéronef selon l'invention comporte en outre des montants disposés entre l'entablement inférieur et l'entablement supérieur, et la bielle de liaison relie les deux branches de l'entablement inférieur à la base de deux montants. Dans cette variante, lorsque la structure comporte deux glaces frontales voisines et une glace latérale à côté de chaque glace frontale, chaque glace latérale étant séparée de la glace frontale correspondante par un montant latéral de glace frontale, alors la bielle de liaison relie avantageusement les deux branches de l'entablement inférieur à la base des deux montants latéraux de glace frontale. Cette position est favorable pour faciliter l'aménagement d'un tableau de bord sous le pare-brise de l'aéronef correspondant.

La bielle de liaison présente par exemple au moins dans sa partie centrale une forme profilée présentant une section fermée. Cette forme permet de donner une résistance en flexion à la bielle de liaison qui peut alors servir de support pour recevoir par exemple un écran de contrôle ou bien divers systèmes habituellement présents dans un tableau de bord d'aéronef. Si la bielle de liaison présente au moins dans sa partie centrale une forme profilée circulaire, elle peut aussi servir de pivot et des systèmes montés sur la bielle peuvent alors être orientés, augmentant ainsi l'ergonomie du tableau de bord de l'aéronef.

Selon une forme de réalisation avantageuse, facilitant notamment le montage et le démontage de la bielle de liaison, cette dernière présente à chacune de ses extrémités un embout rotulé réglable permettant d'assurer un ajustement en longueur de l'ensemble de la bielle.

La bielle de liaison est par exemple réalisée dans un matériau choisi dans l'ensemble des matériaux contenant les alliages d'aluminium et les composites à base de carbone.

La présente invention concerne également une pointe avant d'aéronef, **caractérisée en ce qu'**elle comporte une structure telle que décrite plus haut. Une telle pointe avant d'aéronef peut comporter une planche de bord, et la bielle de liaison peut porter au moins un élément constitutif de la planche de bord.

Enfin, la présente invention concerne aussi un aéronef comportant un fuselage avec une pointe avant, **caractérisé en ce que** la structure de sa pointe avant est une structure telle que décrite plus haut.

Des détails et avantages de la présente invention ressortiront mieux de la description qui suit, faite en référence aux dessins schématiques annexés sur lesquels :
La figure 1 est une vue en perspective schématique montrant la structure d'une pointe avant d'aéronef de l'art antérieur,
La figure 2 est une vue en élévation d'un cadre ouvert non renforcé à gauche et renforcé à droite,
La figure 3 est une vue partielle en perspective d'un renfort de l'art antérieur,
La figure 4 illustre schématiquement un renfort selon la présente invention,
La figure 5 est une vue de côté schématique d'une première forme de réalisation d'un renfort selon l'invention,
La figure 6 correspond à la figure 5 pour une variante de réalisation,
La figure 7 correspond aux figures 5 et 6 pour une seconde variante de réalisation, et
La figure 8 est une vue en perspective d'une forme de réalisation d'une partie supérieure d'une pointe avant d'aéronef renforcée selon la présente invention.

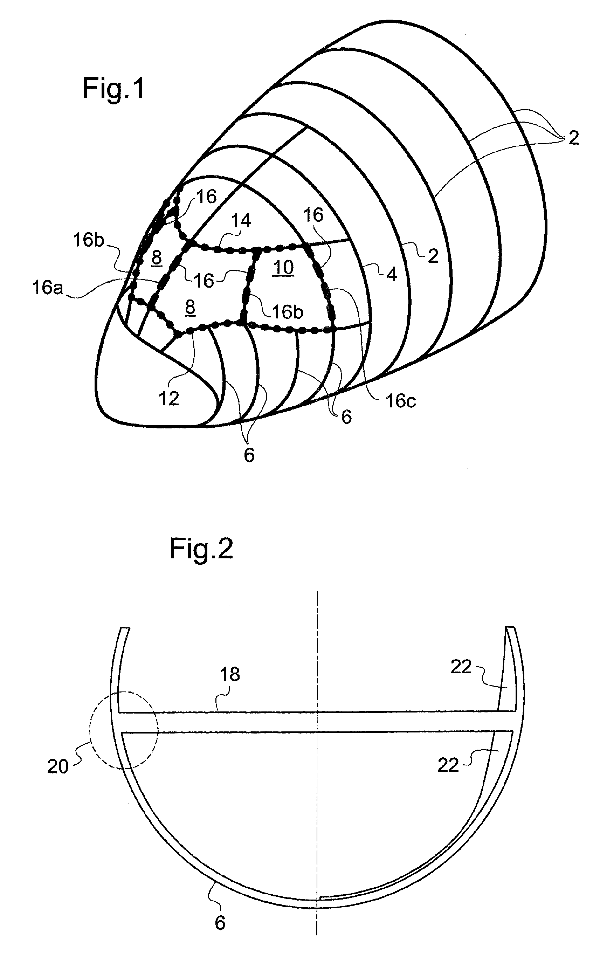

La figure 1 illustre une structure de pointe avant d'aéronef de l'art antérieur. On reconnaît tout d'abord sur cette figure des cadres continus 2. Il s'agit généralement de pièces profilées courbées de manière à former un cercle ou plus généralement une courbe fermée. On trouve de tels cadres continus 2 sur toute la longueur d'un fuselage d'aéronef. Le profil de ces cadres continus 2 est dimensionné de telle sorte qu'aucun renfort structurel ne soit nécessaire à leur niveau.

À l'avant des cadres continus 2 se trouve généralement un cadre continu renforcé 4 et en avant de ce cadre continu renforcé 4 se trouvent des cadres ouverts 6. La structure de l'extrême pointe avant de l'aéronef est particulière et n'est pas décrite ici.

La présente invention concerne plus particulièrement la structure de l'aéronef au niveau des cadres ouverts 6. Cette zone de l'aéronef est particulière en ce qu'elle comporte un pare-brise qui permet aux pilotes d'avoir une bonne vision à l'extérieur de l'aéronef.

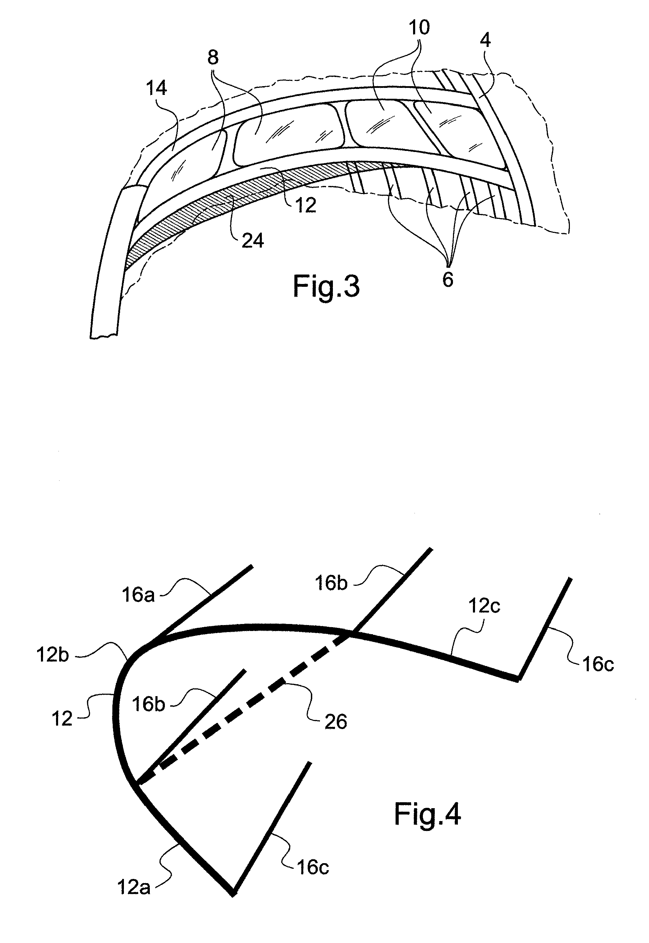

De manière classique, un pare-brise est réalisé en plusieurs pièces : des glaces frontales 8 et des glaces latérales 10. Dans la forme de réalisation de l'art antérieur représenté notamment sur les figures 1 et 3, on a représenté un aéronef dont le pare-brise comporte deux glaces frontales 8 et deux glaces latérales 10.

Les différentes glaces du pare-brise sont montées entre un entablement inférieur 12 et un entablement supérieur 14. Entre les glaces du pare-brise se trouve à chaque fois un montant. On trouve un montant 16a entre les deux glaces frontales 8, un montant 16b à chaque fois entre une glace frontale 8 et une glace latérale 10 et un montant 16c reliant à chaque fois une extrémité libre de l'entablement inférieur 12 avec une extrémité libre de l'entablement supérieur 14. Le montant 16a peut aussi être appelé montant frontal, les montants 16b peuvent être désignés par montants latéraux des glaces frontales et les montants 16c par montants latéraux des glaces latérales.

Les cadres ouverts 6 sont interrompus, et de ce fait ouverts, au niveau du croisement structural de ces cadres avec l'entablement inférieur 12. Un tel cadre est représenté schématiquement sur la figure 2 en vue de face. Ce cadre ouvert 6, de même que les autres cadres de l'aéronef considéré, participent à supporter un plancher 18. Au niveau du cadre ouvert 6 considéré, le plancher 18 correspond au plancher du poste de pilotage de l'aéronef. La partie du cadre ouvert 6 représenté à gauche de la figure 2 n'est pas renforcée. Elle présente un point faible entouré par une ligne pointillée 20. Sur la partie droite de la figure 2, le cadre ouvert 6 présente un renfort 22 obtenu par exemple par un épaississement général du cadre, l'épaississement étant plus important aux abords du plancher 18 pour améliorer notamment le comportement de l'encastrement réalisé entre le plancher 18 et le cadre ouvert 6.

Des renforts 22 tels ceux illustrés sur la partie droite de la figure 2 sont tout à fait nécessaires dans un aéronef pour résister aux contraintes exercées sur le cadre ouvert 6. Par exemple, lorsqu'un aéronef est en vol, la pression régnant à l'intérieur de l'aéronef est bien supérieure à la pression régnant à l'extérieur de celui-ci. Des forces de pression s'exercent alors radialement sur chacun des cadres du fuselage. La forme continue des cadres continus 2 permet une répartition des efforts sur tout le pourtour du cadre. Les forces exercées déforment légèrement le cadre continu 2 de manière à augmenter son diamètre. Les forces de pression viennent ainsi "dilater" le cadre continu 2.

Lorsque le cadre est ouvert, comme c'est le cas pour les cadres ouverts 6, les forces de pression ne se répartissent pas. Elles ont tendance à ouvrir encore plus le cadre et ont tendance à écarter l'une de l'autre les extrémités libres du cadre ouvert 6. Des renforts sont donc nécessaires pour stabiliser la forme du cadre ouvert 6. Un cadre continu 2 peut être quant à lui considéré comme étant autostable.

L'entablement inférieur 12 nécessite lui aussi un renforcement puisqu'il est formé lui aussi par un profil ouvert. La solution adoptée habituellement pour réaliser ce renforcement est de réaliser un voile de renforcement 24 comme illustré sur la figure 3. Un tel voile de renforcement 24 permet d'augmenter l'inertie en flexion de la partie centrale de l'entablement inférieur 12 du pare-brise et limite ainsi les déformations de cet entablement sous l'effet de la pression. Une telle solution permet de limiter efficacement la flexion de l'entablement inférieur 12 mais est complexe à mettre en oeuvre et implique un surplus de masse sensible. En outre, cette zone de l'aéronef est destinée à recevoir des équipements de commande et de visualisation utilisés par les pilotes pour le pilotage de l'aéronef. La présence du voile de renforcement 24 est alors un obstacle pour l'installation des divers systèmes appelés à prendre place devant les pilotes de l'aéronef.

La figure 4 illustre schématiquement la solution proposée par la présente invention. Cette solution prévoit d'établir un lien direct entre deux points opposés de l'entablement inférieur 12. Ce lien est réalisé à l'aide d'une barre destinée à reprendre les déformations de l'entablement inférieur 12 qui présente une forme globale d'arc, ainsi que les déformations des cadres ouverts 6 environnants. La barre de liaison, appelée par la suite bielle 26, agit de la même manière que la corde d'un arc pour maintenir la forme courbe de celui-ci. Cette bielle 26 travaille de façon optimale puisqu'elle travaille en traction.

Comme illustré sur la figure 4, l'entablement inférieur 12, en forme d'arc, présente deux branches 12a et 12c reliées entre elles par une partie cintrée 12b. Les branches 12a et 12c peuvent présenter diverses formes en fonction notamment de la forme que l'on souhaite donner au pare-brise. Cet entablement inférieur 12 peut être formé par une pièce unique mais il peut aussi être constitué de plusieurs éléments. Ainsi par exemple, l'entablement inférieur 12 peut comprendre le haut (extrémité libre) des cadres ouverts 6 et/ou le bas des montants 16a et/ou 16b et/ou 16c

La bielle 26 vient de préférence établir un lien direct entre deux points symétriques de l'entablement inférieur 12. Elle relie ainsi les deux branches 12a et 12c de cet entablement. De manière encore préférée, ces points sont disposés au niveau de la partie basse de montants. Ces montants sont par exemple les montants 16b latéraux des glaces frontales, c'est-à-dire les montants séparant une glace frontale 8 de la glace latérale 10 voisine.

La bielle 26 empiète également sur le volume intérieur du poste de pilotage. Toutefois, à la différence d'un voile de renforcement 24 tel celui illustré sur la figure 3, il est possible de laisser passer divers éléments entre la bielle 26 et l'entablement inférieur 12. De ce fait, la bielle 26 est moins gênante qu'un voile de renforcement 24 en ce qui concerne l'aménagement du poste de pilotage sous le pare-brise de l'aéronef.

La présente invention propose de mettre à profit cette bielle 26 pour en faire également un élément de support mécanique. Cette bielle 26 intègre donc en supplément une fonction additionnelle de support structural. Cette bielle 26 peut ainsi par exemple être utilisée pour supporter des écrans de contrôle et/ou des systèmes de commande. De ce fait, la réalisation structurale de la planche de bord peut être simplifiée, ce qui conduit à un allègement supplémentaire. En effet, la solution proposée permet d'alléger la structure par rapport à la solution classique mettant en oeuvre un voile de renforcement 24. Son utilisation comme support mécanique permet d'économiser également la masse des supports utilisés dans les tableaux de bords de l'art antérieur qui présentent un voile de renforcement.

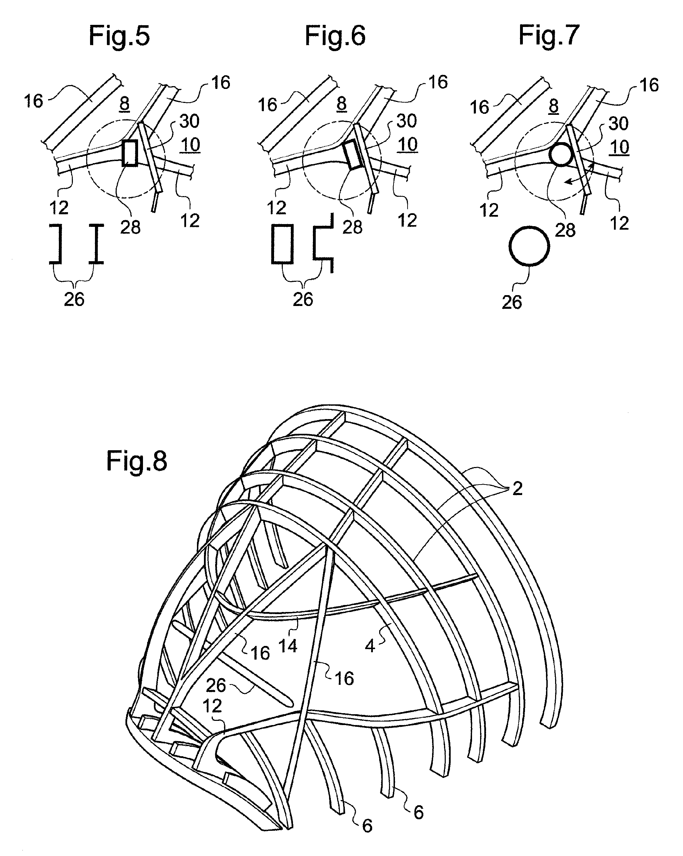

Les figures 5 à 7 illustrent divers positionnements et formes que peut prendre une bielle 26 dans la partie avant d'un aéronef. Sur ces figures, on a schématiquement représenté l'entablement inférieur 12, le montant 16a central, un montant 16b latéral d'une glace frontale (disposé entre une glace frontale 8 et la glace latérale 10 voisine) ainsi qu'un emplacement 28 réservé pour loger la bielle 26.

Dans la forme de réalisation de la figure 5, la bielle 26 est utilisée uniquement pour rigidifier l'entablement inférieur 12. Un écran 30 du tableau de bord de l'aéronef est par exemple monté à proximité de la bielle 26 mais sans être fixé sur celle-ci. Cet écran 30 est par exemple supporté par un châssis (non représenté) qui sert de structure au tableau de bord et qui est par exemple fixé sur le plancher du poste de pilotage. Le profilé utilisé ici pour réaliser la bielle 26 peut être de manière classique un profilé en C ou en I.

Dans la variante de réalisation de la figure 6, la bielle 26 est éventuellement utilisée comme support pour l'écran 30 et/ou pour d'autres instruments du tableau de bord correspondant. Comme illustré sur la figure 6, la bielle 26 est orientée en fonction de l'inclinaison à donner à l'écran 30. La bielle 26 est ici utilisée également comme élément de support. Elle ne travaille donc plus uniquement en traction mais également en flexion. Il est donc choisi de préférence d'avoir une forme profilée se présentant sous la forme d'un tube à section rectangulaire ou bien d'un profilé à section en Ω. Le fait que la bielle 26 travaille ici également en flexion n'impose pas forcément d'augmenter la masse de la bielle 26. Ici, on adapte le profil de la bielle 26 afin qu'elle résiste mieux en flexion.

Dans la variante de réalisation proposée sur la figure 7, la bielle 26 se présente sous la forme d'un tube creux à section circulaire. La bielle 26 peut alors ici aussi servir de support pour un écran 30 et il est même possible d'envisager de régler l'inclinaison de l'écran 30 en le faisant pivoter autour de la bielle 26. La bielle 26 est alors ici également utilisée comme palier d'articulation. Cette fonction supplémentaire peut être rajoutée sans augmentation du prix de revient de la structure.

Dans une forme de réalisation préférée, les extrémités de la bielle 26 sont munies d'embouts rotulés pour la liaison avec l'entablement inférieur 12. Ces embouts rotulés sont des embouts réglables permettant un ajustement en longueur de l'ensemble de la bielle 26.

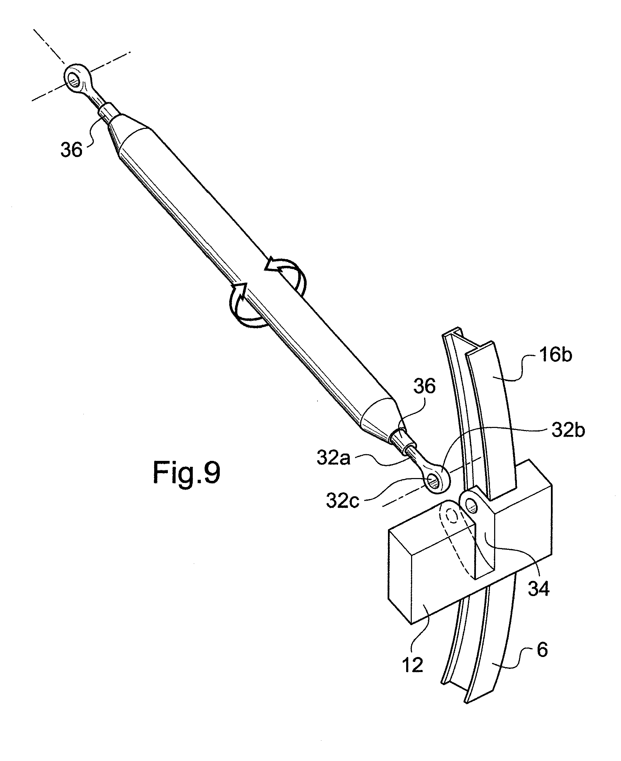

La figure 9 illustre plus en détails le montage de la bielle 26 sur la structure de l'aéronef. On reconnaît sur cette figure, à chaque fois partiellement, l'entablement inférieur 12, une extrémité supérieure d'un cadre ouvert 6 et un montant 16b latéral d'une glace frontale 8. La bielle 26 présente à chacune de ses extrémités un taraudage longitudinal. À une première extrémité, le taraudage réalisé est un taraudage avec pas à gauche et à l'autre extrémité, le taraudage présente un pas à droite. Chaque taraudage reçoit alors un embout rotulé 32. Chacun de ses embouts se présente sous la forme d'une tige filetée 32a et d'un anneau 32b. Un palier 32c est disposé à l'intérieur de l'anneau 32b et peut pivoter à la manière d'une rotule, c'est-à-dire autour d'un point, dans l'anneau 32b. Une chappe 34 de reprise présente la forme d'un étrier comportant une base permettant sa fixation sur la structure de l'aéronef et deux branches entre lesquelles est prévu un logement pour recevoir l'anneau 32b de l'embout rotulé 32. Un axe de liaison (non représenté) vient traverser le palier 32c de l'embout rotulé 32 ainsi qu'un alésage formant palier réalisé dans chacune des branches de la chappe 34.

Lorsque l'ensemble bielle/embouts rotulés est monté, une rotation du corps de la bielle 26 permet un allongement ou un raccourcissement de cet ensemble permettant d'adapter sa longueur de manière très précise. Après réglage, la position retenue est bloquée à l'aide de contre-écrous 36 -montés préalablement sur les tiges filetées 32a- et sécurisé à l'aide de fils frein (non représentés).

Le montage de la bielle 26 ci-dessus est donné à titre d'exemple non limitatif. L'homme du métier a à disposition d'autres montages possibles d'une bielle entre deux parties d'une structure.

Le matériau utilisé pour la réalisation de la bielle peut être par exemple un alliage à base d'aluminium. Un tel matériau est d'un prix de revient peu élevé tout en présentant une masse limitée. Toutefois, si un gain de masse doit être privilégié, la bielle 26 peut être réalisée dans une matière composite à base de carbone. Cette solution permet d'assurer un gain de masse mais présente l'inconvénient d'augmenter le prix de revient de la structure. D'autres matériaux (alliages métalliques, matières composites, ...) peuvent bien entendu être envisagés ici.

La figure 8 propose une nouvelle structure à proximité d'un pare-brise d'aéronef pour la mise en oeuvre de la présente invention. On remarque tout d'abord sur cette figure la présence d'une bielle 26 reliant deux points de l'entablement inférieur 12. On remarque également une forme originale des montants de pare-brise. Toutefois, cette structure est donnée à titre d'exemple non limitatif et la présente invention peut également être mise en oeuvre avec une structure de pointe avant d'aéronef de l'art antérieur telle par exemple la structure illustrée schématiquement sur la figure 1.

La présente invention est particulièrement bien adaptée pour être mise en oeuvre avec des systèmes modernes qui utilisent des écrans minces voire très minces. Il est également possible d'envisager ici l'utilisation d'écrans tactiles. En effet, la présente invention permet de rapprocher les écrans des pilotes. Une telle solution est préférable dans une configuration de poste de pilotage ne présentant pas de manche central. La structure proposée par la présente invention est particulièrement bien adaptée à un ensemble de planche de bord potentiellement peut encombrant. Elle permet également d'intégrer de nouveaux matériels car elle permet une optimisation du volume disponible en dessous du pare-brise de l'aéronef.

La présente invention telle que décrite ci-dessus permet une optimisation des masses de la structure de l'aéronef car la bielle présentée présente une meilleure efficacité mécanique vis-à-vis des solutions de l'art antérieur.

La solution proposée par la présente invention permet également une simplification générale de la structure. En effet, la bielle telle que décrite plus haut est simple à assembler.

Comme déjà évoqué, la présente invention permet de réaliser des gains de volume ainsi que des gains de coûts par effet induit. Elle est particulièrement bien adaptée pour la réalisation de tableaux de bords modernes mettant en oeuvre notamment de nouvelles technologies (écrans minces, écrans tactiles, ...).

La présente invention ne se limite pas à la forme de réalisation préférée décrite ci-dessus à titre d'exemple non limitatif. Elle concerne également les variantes de réalisation à la portée de l'homme du métier dans le cadre des revendications ci-après.

## Revendications

1. Structure de pointe avant d'aéronef comportant des cadres (2, 4, 6), un entablement inférieur (12) et un entablement supérieur (14) destinés à recevoir un pare-brise, l'entablement inférieur (12) présentant une forme cintrée comprenant deux branches (12a, 12c),
**caractérisée en ce que** les deux branches de l'entablement inférieur sont reliées entre elles par une bielle (26) de liaison.

2. Structure de pointe avant d'aéronef selon la revendication 1, **caractérisée en ce qu'**elle comporte en outre des montants (16a, 16b, 16c) disposés entre l'entablement inférieur (12) et l'entablement supérieur (14), et **en ce que** la bielle (26) de liaison relie les deux branches de l'entablement inférieur (12) à la base de deux montants (16b).

3. Structure de pointe avant d'aéronef selon la revendication 2, **caractérisée en ce qu'**elle comporte deux glaces frontales (8) voisines et une glace latérale (10) à côté de chaque glace frontale (8), **en ce que** chaque glace latérale (10) est séparée de la glace frontale (8) correspondante par un montant (16b) latéral de glace frontale, et **en ce que** la bielle (26) de liaison relie les deux branches (12a, 12c) de l'entablement inférieur (12) à la base des deux montants (16b) latéraux de glace frontale.

4. Structure de pointe avant d'aéronef selon l'une des revendications 1 à 3, **caractérisée en ce que** la bielle (26) de liaison présente au moins dans sa partie centrale une forme profilée présentant une section fermée.

5. Structure de pointe avant d'aéronef selon la revendication 4, **caractérisée en ce que** la bielle (26) de liaison présente au moins dans sa partie centrale une forme profilée circulaire.

6. Structure de pointe avant d'aéronef selon l'une des revendications 1 à 5, **caractérisée en ce que** la bielle (26) de liaison présente à chacune de ses extrémités un embout rotulé réglable permettant d'assurer un ajustement en longueur de l'ensemble de la bielle.

7. Structure de pointe avant d'aéronef selon l'une des revendications 1 à 6, **caractérisée en ce que** la bielle (26) de liaison est réalisée dans un matériau choisi dans l'ensemble des matériaux contenant les alliages d'aluminium et les composites à base de carbone.

8. Pointe avant d'aéronef, **caractérisée en ce qu'**elle comporte une structure selon l'une des revendications 1 à 7.

9. Pointe avant d'aéronef selon la revendication 8, **caractérisée en ce qu'**elle comporte une planche de bord, et **en ce que** la bielle (26) de liaison porte au moins un élément constitutif de la planche de bord.

10. Aéronef comportant un fuselage avec une pointe avant, **caractérisé en ce que** la structure de sa pointe avant est une structure selon l'une des revendications 1 à 7.

## Patentansprüche

1. Bugstruktur eines Luftfahrzeugs mit Rahmen (2, 4, 6), einem unteren Fenstersims (12) und einem oberen Fenstersims (14) zur Aufnahme einer Windschutzscheibe, wobei der untere Fenstersims (12) eine gewölbte Form mit zwei Schenkeln (12, 12c) hat,
**dadurch gekennzeichnet, dass** die beiden Schenkel des unteren Fenstersimses durch eine Verbindungsstange (26) miteinander verbunden sind.

2. Bugstruktur eines Luftfahrzeugs nach Anspruch 1,
**dadurch gekennzeichnet, dass** sie ferner Streben (16a, 16b, 16c) umfasst, die zwischen dem unteren Fenstersims (12) und dem oberen Fenstersims (14) angeordnet sind, und dass die Verbindungsstange (26) die beiden Schenkel des unteren Fenstersimses (12) an der Basis der beiden Streben (16b) verbindet.

3. Bugstruktur eines Luftfahrzeugs nach Anspruch 2,
**dadurch gekennzeichnet, dass** sie zwei benachbarte Frontscheiben (8) und eine Seitenscheibe (10) neben jeder Frontscheibe (8) umfasst, dass jede Seitenscheibe (10) von der jeweiligen Frontscheibe (8) durch eine Seitenstrebe (16b) der Frontscheibe getrennt ist, und dass die Verbindungsstange (26) die beiden Schenkel (12a, 12c) des unteren Fenstersimses (12) an der Basis der beiden Seitenstreben (16b) der Frontscheibe verbindet.

4. Bugstruktur eines Luftfahrzeugs nach einem der Ansprüche 1 bis 3,
**dadurch gekennzeichnet, dass** die Verbindungsstange (26) wenigstens in ihrem mittleren Teil eine Stromlinienform mit einem geschlossenen Querschnitt aufweist.

5. Bugstruktur eines Luftfahrzeugs nach Anspruch 4,
**dadurch gekennzeichnet, dass** die Verbindungsstange (26) wenigstens in ihrem mittleren Teil eine runde Stromlinienform aufweist.

6. Bugstruktur eines Luftfahrzeugs nach einem der Ansprüche 1 bis 5,
**dadurch gekennzeichnet, dass** die Verbindungsstange (26) an jedem ihrer Enden einen verstellbaren Ösenkopf aufweist, der eine Längenanpassung der gesamten Stange erlaubt.

7. Bugstruktur eines Luftfahrzeugs nach einem der Ansprüche 1 bis 6,
**dadurch gekennzeichnet, dass** die Verbindungsstange (26) in einem Material ausgeführt ist, das aus der Reihe der Werkstoffe gewählt ist, die Aluminiumlegierungen und Verbundmaterialen auf der Basis von Kohlenstoff enthalten.

8. Bug eines Luftfahrzeugs,
**dadurch gekennzeichnet, dass** er eine Struktur nach einem der Ansprüche 1 bis 7 umfasst.

9. Bug eines Luftfahrzeugs nach Anspruch 8,
**dadurch gekennzeichnet, dass** er ein Instrumentenbrett umfasst, und dass die Verbindungsstange (26) wenigstens ein wesentliches Bestandteil des Instrumentenbretts trägt.

10. Luftfahrzeug, das einen Rumpf mit einem Bug umfasst,
**dadurch gekennzeichnet, dass** die Struktur des Bugs eine Struktur nach einem der Ansprüche 1 bis 7 ist.

## Claims

1. An aircraft nose structure comprising frames (2, 4, 6), a lower windshield frame member (12) and an upper windshield frame member (14) which are adapted to receive a windshield, the lower windshield frame member (12) having an arcuate shape comprising two branches (12a, 12c),
**characterized in that** both branches of the lower windshield frame member are connected together by a tie-rod (26).

2. An aircraft nose structure according to claim 1, **characterized in that** it further comprises uprights (16a, 16b, 16c) disposed between the lower windshield frame member (12) and the upper windshield frame member (14), and **in that** the tie-rod (26) links the two branches of the lower windshield frame member (12) to the base of two uprights (16b).

3. An aircraft nose structure according to claim 2, **characterized in that** it comprises two neighboring front panes (8) and a lateral pane (10) beside each front pane (8), **in that** each lateral pane (10) is separated from the corresponding front pane (8) by a front pane lateral upright (16b), and **in that** the tie-rod (26) links the two branches (12a, 12c) of the lower windshield frame member (12) to the base of the two front pane lateral uprights (16b).

4. An aircraft nose structure according to one of claims 1 to 3, **characterized in that** the tie-rod (26) has at least in its central portion a closed profiled cross-section.

5. An aircraft nose structure according to claim 4, **characterized in that** the tie-rod (26) has at least in its central portion a circular profiled cross-section.

6. An aircraft nose structure according to one of claims 1 to 5, **characterized in that** the tie-rod (26) has at each of its ends an adjustable ball-jointed end piece enabling length adjustment of the tie-rod assembly to be made.

7. An aircraft nose structure according to one of claims 1 to 6, **characterized in that** the tie-rod (26) is formed from a material chosen from the group of materials containing aluminum alloys and carbon-based composites.

8. An aircraft nose, **characterized in that** it comprises a structure according to one of claims 1 to 7.

9. An aircraft nose according to claim 8, **characterized in that** it comprises a dashboard, and **in that** the tie-rod (26) bears at least one constituent member of the dashboard.

10. An aircraft comprising a fuselage with a nose, **characterized in that** the structure of its nose is a structure according to one of claims 1 to 7.
